**Europäisches Patentamt**

**European Patent Office**

**Office européen des brevets**

(11) Numéro de publication: **0 275 751 B1**

# FASCICULE DE BREVET EUROPEEN

(45) Date de publication de fascicule du brevet: **21.04.93** (51) Int. Cl.5: **H04B 1/66**, G10L 9/14

(21) Numéro de dépôt: **87402854.1**

(22) Date de dépôt: **15.12.87**

(54) **Procédé et dispositif de transmission numériques de signaux vocaux par voie radio.**

(30) Priorité: **19.12.86 FR 8617877**

(43) Date de publication de la demande:
**27.07.88 Bulletin 88/30**

(45) Mention de la délivrance du brevet:
**21.04.93 Bulletin 93/16**

(84) Etats contractants désignés:
**DE GB IT**

(56) Documents cités:

IEEE JOURNAL ON SELECTED AREAS IN COMMUNICATIONS, vol. SAC-4, no. 1, janvier 1986, pages 133-141, IEEE, New York, US; K. OZAWA et al.: "A study on pulse search algorithms for multipulse excited speech coder realization"

IEEE TRANSACTIONS ON COMMUNICATIONS, vol. COM-30, no. 4, avril 1982, pages 663-673, IEEE, New York, US; V.R. VISWANATHAN et al.: "Design of a robust baseband LPC coder for speech transmission over 9.6 Kbit/s noisy channels"

PROCEEDINGS OF ICASSP'85, Tampa, Florida, 26-29 mars 1985, vol. 3, pages 26.4.1 - 26.4.4., IEEE, New York, US; Z.A. PUTNINS et al.: "A multi-pulse LPC synthesizer for telecommunications use"

PROCEEDINGS OF ICC'84, Amsterdam, 14-17 mai 1984, vol. 3, pages 1159-1162, IEEE, New York, US; R.J. SLUYTER et al.: "A 9.6 Kbit/s speech coder for mobile radio applications"

(73) Titulaire: **THOMSON-CSF**
**51, Esplanade du Général de Gaulle**
**F-92800 Puteaux(FR)**

(72) Inventeur: **Laurent, Pierre-André**
**THOMSON-CSF SCPI 19, avenue de Messine**
**F-75008 Paris(FR)**

(74) Mandataire: **Lincot, Georges et al**
**THOMSON-CSF, SCPI, B.P. 329, 50, rue Jean-Pierre Timbaud**
**F-92402 Courbevoie Cédex (FR)**

Rank Xerox (UK) Business Services
(3.10/3.5x/3.0.1)

EP 0 275 751 B1

## Description

La présente invention concerne un procédé et un dispositif de transmissions numériques de signaux vocaux par voie radio.

Les transmissions classiques de phonie sur voie radio s'effectuent généralement par modulation de fréquence (ou modulation de phase) analogique, à faible indice.

Cependant, le problème du chiffrement à haute sécurité de la parole analogique n'a, à l'heure actuelle, pas trouvé de solution satisfaisante qui permet des transmissions en phonie sans perte d'information. Seuls les procédés de numérisation de la parole tels que décrits par exemple dans les articles IEEE Journal on Selected Areas in Communications, vol. SAC-4, no. 1, janvier 1986, pages 133-141, IEEE, New York, US et IEEE Transactions on Communications, vol. COM-30, no. 4, avril 1982, pages 663-673, IEEE, New York, US, permettent d'effectuer un chiffrement de parole de haute qualité mais ceci implique la mise en oeuvre de transmissions radio de type numérique qui ont l'inconvénient d'élargir le spectre du signal, de réduire corrélativement la protection entre canaux et d'imposer l'utilisation d'une modulation à spectre le plus étroit possible. D'autre part, la portée des émetteurs est diminuée lorsque le débit de la parole numérisée devient important de l'ordre par exemple de 10 kilobits par seconde, et on assiste à une dégradation sensible des performances par rapport à une solution entièrement analogique non chiffrée, en présence de fading, lorsque notamment les liaisons se font entre émetteur et récepteur en mouvement.

Le but de l'invention est de pallier les inconvénients précités.

A cet effet, l'invention a pour objet un procédé de transmission numérique de signaux vocaux par voie radio dans lequel la parole est segmentée à l'émission en trames de durée fixe et transmises indépendamment les unes des autres et est reconstituée à la réception par un filtre de synthèse, caractérisé en ce que chaque trame comporte un premier champ composé de mots binaires de structures identiques pour coder la position et l'amplitude des impulsions d'excitation du filtre de synthèse, un deuxième champ composé d'au moins un mot binaire pour coder l'amplitude de l'impulsion de référence associée à la trame et un troisième champ composé de mots binaires pour coder les coefficients du filtre de synthèse, seuls les codes représentant l'amplitude de référence et les coefficients du filtre de synthèse composant les deuxième et troisième champ étant accompagnés de codes autocorrecteurs d'erreurs, en ce que chaque mot binaire composant le premier champ est complété par un bit de parité, et en ce que les impulsions incorrectes de position et d'amplitude d'une trame reçue ne sont pas prises en compte si au plus un nombre déterminé $K_1$ de bits de parité sont trouvés incorrects.

L'invention a principalement pour avantage qu'elle permet une augmentation sensible de la probabilité de l'erreur maximale acceptable sur les paramètres peu sensibles des signaux à transmettre alors que la probabilité d'erreur sur les parties critiques des signaux à transmettre est notablement plus faible. Elle permet également d'augmenter sensiblement la portée géographique des transmissions par rapport aux transmissions où le facteur limitatif est constitué par le taux d'erreur sur les champs sensibles de chaque trame transmise.

D'autres caractéristiques et avantages de l'invention apparaîtront ci-après à l'aide de la description faite en regard des dessins annexés qui représentent :

- la figure 1 un tableau représentatif d'un plan de modulation à quatre états utilisés pour la transmission des signaux numériques de parole selon l'invention ;
- la figure 2 un mode de réalisation d'un modulateur selon l'invention ;
- la figure 3 un mode de réalisation d'un démodulateur selon l'invention.

Selon l'invention, la parole est segmentée en trames numériques de durée fixe, par exemple 25 millisecondes, transmises indépendamment les unes des autres. Chaque trame est partagée en plusieurs champs dont les sensibilités respectives aux erreurs de transmission sont différentes, les champs les plus sensibles ne représentant qu'une part modérée du nombre total de bits véhiculés par une trame.

Le procédé consiste à transmettre à faible taux d'erreur les paramètres critiques de la trame en les accompagnant de codes autocorrecteurs d'erreurs pour détecter et corriger en réception les erreurs, à transmettre sans précaution particulière, autre qu'une simple détection d'erreurs (bit de parité), les paramètres non critiques, et à utiliser une stratégie de lutte contre les erreurs de transmission adaptée à la fois à la structure des erreurs (paquets d'erreurs arrivant à intervalles assez réguliers) et aux caractéristiques physiques de l'oreille des opérateurs écoutant les messages de parole reconstitués à la réception.

La parole synthétisée est obtenue à la réception à la sortie d'un filtre numérique dit filtre prédicteur ou filtre de synthèse dont l'entrée est excitée par les impulsions de la trame numérique décrite précédemment. Pour obtenir un fonctionnement correct du filtre de synthèse, la trame numérique est partagée en trois champs.

Le premier champ est composé de mots binaires de structures identiques qui sont destinés à coder à la fois la position $x_i$ et l'amplitude $y_i$ des impulsions d'excitation du filtre de synthèse. Ce champ représente la partie non sensible de la trame, et les mots qui le constituent peuvent supporter un taux d'erreur relativement élevé sans que cela nuise trop à l'intelligibilité du signal de parole restitué.

Le deuxième champ représente l'amplitude de référence associée à la trame, celle-ci étant constituée par exemple par l'amplitude de la plus grande impulsion du signal d'excitation. Ce champ est sensible aux erreurs et son altération peut se traduire par des fluctuations importantes du niveau de la parole synthétisée qui peuvent nuire à la compréhension.

Le troisième champ comporte un nombre déterminé de coefficients, par exemple 10, permettant de décrire le filtre de synthèse. Ceux-ci sont constitués par exemple par des coefficients dits "PARCOR" dont les valeurs restent comprises entre -1 et +1 pour permettre de garantir la stabilité du filtre de synthèse. Ce champ est lui aussi sensible aux erreurs car celles-ci peuvent changer la tonalité des sons restitués ou encore modifier la restitution des voyelles.

La transmission de ces divers champs est réalisée sur voie radio en modulation de fréquence de la manière suivante.

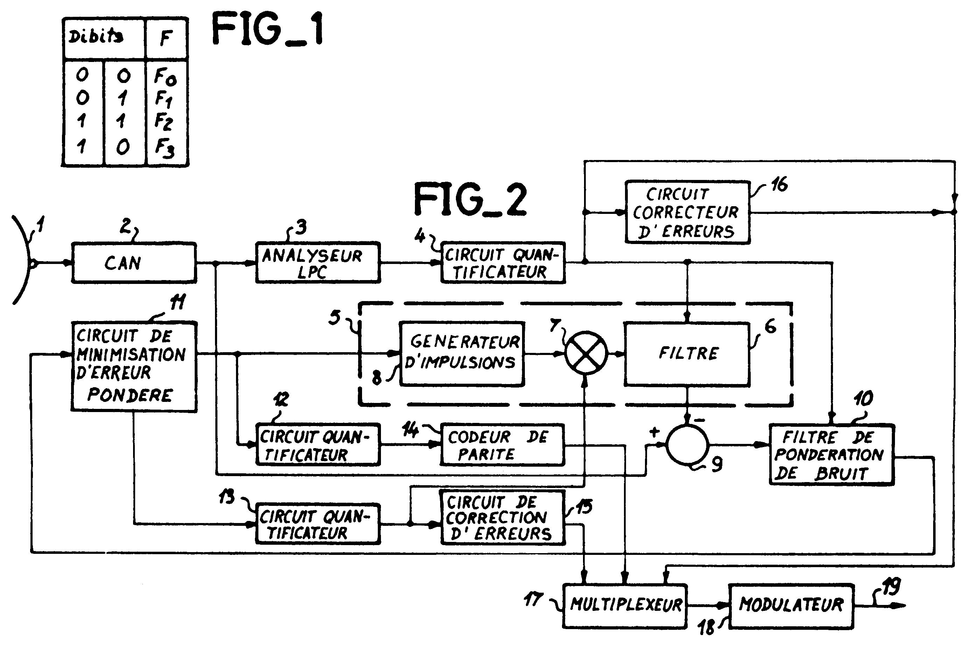

Pour le premier champ, chaque mot est complété par un bit de parité. Les bits résultants sont regroupés par paires encore appelés dibits ou symboles (4-aires) puis ils sont transmis en utilisant une modulation de fréquence à quatre états, à transition progressive entre les états successifs, tel que représenté par le tableau de la figure 1. Dans ce tableau les quatre états de la modulation représentés sont associés à quatre fréquences définies de la façon suivante.

Pour un dibit (0,0) le modulateur transmet une fréquence $F_0$ = FC-3 $\Delta$F/2, où FC représente la fréquence centrale de transmission et $\Delta$F une excursion en fréquence constante ;

Pour un dibit (0,1) le modulateur transmet la fréquence $F_1$ = FC- $\Delta$F/2 ;

Pour un dibit (1,1) le modulateur transmet la fréquence $F_2$ = FC + $\Delta$F/2

et pour un dibit (1,0) le modulateur transmet la fréquence $F_3$ = FC + 3 $\Delta$F/2.

La correspondance entre les dibits et les fréquences émises est définie de façon qu'il n'y ait qu'un bit de différence entre les dibits associés à deux fréquences adjacentes ce qui rend minimal le taux d'erreur à la réception.

A la réception, après démodulation et décision sur les dibits reçus, les mots et leurs bits de parité sont reconstitués. Un traitement des erreurs est effectué et si au plus un nombre réduit de $K_1$ bits de parité sont incorrects, les impulsions à parité incorrecte ne sont pas prises en compte. On suppose à ce stade que le taux d'erreur est faible et qu'il est préférable d'effacer des impulsions perturbées qui sont dans ces conditions assimilées à du bruit.

Si le nombre de bits de parité incorrecte est compris entre les nombres $K_1$ + 1 et $K_2$, toutes les impulsions y compris celles dont la parité est correcte sont prises en compte. Dans ce cas, on considère que même si la parole synthétisée est fortement bruitée elle est cependant plus compréhensible que si les impulsions perturbées étaient effacées.

Enfin, si le nombre de bits à parité incorrecte est compris entre les nombres $K_2$ + 1 et K, où K est le nombre total d'impulsions codées, le procédé ne prend pas en compte les impulsions de la trame courante et utilise comme jeu d'impulsions pour le filtre de synthèse le dernier jeu d'impulsions qui a été reconnu correct.

Pour le deuxième champ qui transmet l'amplitude de référence du signal vocal, les bits sont complétés par des bits de redondance, code BCH par exemple, pour former un mot de code autocorrecteur d'une erreur et détecteurs de deux erreurs.

Chacun des bits du mot ainsi formé est transformé en un dibit. Par exemple, un bit de valeur 0 est transformé en un dibit (0,0) pour émettre, selon le tableau de la figure 1, une fréquence $F_0$ et un bit de valeur 1 est transformé en un dibit (1,0) pour émettre, toujours en se reportant au tableau de la figure 1, une fréquence $F_3$.

L'émission du deuxième champ s'effectue de la même façon que pour le champ 1. Toutefois, à la réception les fréquences $F_0$ et $F_1$ sont considérées comme équivalentes car elles correspondent à un bit 0 pour le champ considéré ; il en est de même pour les fréquences $F_2$ et $F_3$ qui correspondent à un bit égal à 1.

Cette façon de procéder permet de diminuer considérablement la probabilité d'erreur à la réception, puisque, la transformation d'un bit 1 en un bit 0, ou vice versa, revient à confondre les deux fréquences extrêmes utilisées, ce qui est, pour un rapport signal/bruit donné, beaucoup plus rare que l'éventualité qui consisterait à confondre deux fréquences adjacentes. Cependant elle réduit localement le débit transmis d'un facteur 2, puisqu'un symbole ne véhicule plus qu'un bit d'information comparé à deux dans le cas précédent. Autrement dit, si le débit du canal en symboles par seconde reste inchangé, son débit en bits par seconde décroît. La réduction du débit utile se traduit par un nombre d'impulsions légèrement inférieur à ce qu'il est dans le système de départ mais ceci a peu de répercussions sur la qualité de la parole synthétisée, en comparaison de l'amélioration apportée par la solution proposée.

Au niveau de la réception trois cas peuvent se présenter suivant qu'aucune erreur n'est détectée, qu'une seule erreur est détectée ou qu'une configuration d'erreur non corrigée est détectée. Dans le premier cas, aucune action particulière n'est à entreprendre. Dans le deuxième cas, où une seule erreur est détectée, cette erreur est naturellement corrigée. Enfin dans le troisième cas qui correspond le plus souvent à celui où il y a au moins deux erreurs détectées, l'amplitude codée est déclarée non valide et est remplacée par la dernière amplitude reconnue valide affectée d'un coefficient multiplicateur inférieur à 1, car on peut considérer dans ce dernier cas que la trame est vraisemblablement perturbée et qu'il vaut mieux l'atténuer.

Le troisième champ, qui contient les coefficients du filtre de synthèse, est constitué par un nombre de bits relativement élevé. A titre d'exemple ce champ peut comporter 40 bits pour coder 10 coefficients. Le nombre de bits alloués à chacun des coefficients est fonction décroissante de son rang, et, pour un coefficient donné, l'effet d'une erreur sur un bit est fonction du poids du bit considéré. Comme il est difficile de protéger par des codes correcteurs simples des mots comportant un grand nombre de bits, le procédé selon l'invention consiste à transmettre les bits de poids faible des coefficients de la même façon que ceux du premier champ, avec deux bits par symbole, et à transmettre les bits de poids fort des coefficients en un seul mot complété par des bits de redondance de type BCH, par exemple, pour former un code correcteur d'une erreur et détecteur de deux erreurs dans ce mot. Ce mot est ensuite transmis suivant le même procédé que le deuxième champ de la trame à raison d'un bit par symbole.

A la réception une stratégie analogue à celle utilisée pour le deuxième champ est mise en oeuvre :

- si aucune erreur n'est détectée dans les bits de poids fort, les coefficients définis par les poids forts et les poids faibles du mot sont utilisés tels qu'ils sont reçus ;
- par contre si une erreur est détectée, ladite erreur est corrigée et les bits de poids forts corrigés ainsi que les bits de poids faibles sont utilisés pour appliquer les coefficients sur le filtre de synthèse ;
- enfin si une configuration d'erreur est telle que le troisième champ n'est pas corrigible l'ensemble des coefficients transmis par le troisième champ est déclaré non valide et le procédé désigne alors le paquet de coefficients reçu précédemment reconnu comme valide qui peut être utilisé. Dans ce cas, on fait naturellement l'hypothèse implicite que les variations de tonalité de la parole sont relativement lentes (ce qui est vrai en pratique) et que le remplacement d'un jeu de coefficients par le jeu relatif à la trame précédente n'est pas ou peu perceptible.

Un dispositif de transmission faisant application du procédé de l'invention est représenté à la figure 2. Ce dispositif est excité par un microphone 1 et comprend un convertisseur analogique-numérique 2, un analyseur de spectre 3, un circuit quantificateur 4 couplé dans cet ordre en série à l'entrée d'un synthétiseur de parole 5 représenté à l'intérieur d'une ligne en pointillés. Le synthétiseur de parole 5 comprend de façon connue, un filtre de synthèse 6 (composé éventuellement de façon connue par un filtre transversal non récursif), un circuit multiplieur 7 et un générateur d'impulsions 8. La sortie du filtre de synthèse 6 est couplée à l'entrée "-" d'un circuit soustracteur 9 dont l'entrée "+" est reliée à la sortie du convertisseur analogique-numérique 2. Le dispositif de transmission comprend également un filtre de pondération de bruit 10 (composé éventuellement de façon connue par un filtre transversal non récursif) couplé entre la sortie du circuit soustracteur 9 et une entrée d'un circuit de minimisation d'erreur pondérée 11, couplé d'une part, à une entrée du générateur d'impulsions 8 et d'autre part, aux entrées de deux circuits de quantification 12 et 13. Les circuits de quantification 12 et 13 sont reliés respectivement à un codeur de parité 14 et à un codeur de bits de redondance autocorrecteurs d'erreurs 15. Le dispositif de transmission comprend également un deuxième codeur de bits de redondance autocorrecteurs d'erreurs 16 couplé à la sortie du circuit quantificateur 4 et un multiplexeur 17. Le multiplexeur 17 transmet sur un canal 19 à travers un modulateur 18 à quatre états de fréquence les informations transmises respectivement par le codeur de parité 14, le codeur 15 et le codeur 16.

Le fonctionnement du dispositif de transmission est le suivant : les signaux de parole transmis par le microphone 1 sont appliqués à l'entrée du convertisseur analogique-numérique 2 pour être transformés en échantillons numériques qui sont appliqués respectivement à l'entrée de l'analyseur de spectre 3 et à l'entrée marquée "+" du circuit soustracteur 9. L'analyseur 3 effectue de façon connue une analyse LPC (abréviation du terme anglo-saxon "linear productive coding") des signaux fournis par le convertisseur analogique-numérique 2 et les échantillons obtenus sont appliqués à l'entrée du quantificateur 4 qui applique les coefficients $K_i$ sur les entrées des coefficients du filtre de synthèse 6. Les bits de poids les plus forts des coefficients $K_i$ sont appliqués à l'entrée du circuit de correction d'erreurs 16 qui leur adjoint des bits de redondance et l'ensemble constitué par les bits de poids forts et des bits poids faibles auxquels sont adjoints des bits de redondance, est appliqué sur une première entrée du multiplexeur 17. Les mots de code $Y_i$ représentant les impulsions d'excitation du filtre de synthèse, sont appliqués au filtre de synthèse 6 par l'intermédiaire du générateur d'impulsion 8. Les impulsions obtenues sont appliquées sur une première entrée d'opérande du circuit multiplieur 7. L'amplitude de l'impulsion de grandeur maximale est détectée de façon connue par le circuit de minimisation d'erreur pondérée 11 et est quantifiée par le circuit de quantification 13, avant d'être appliquée sur la deuxième entrée d'opérande du circuit multiplieur 7. Le résultat de la multiplication est appliqué à l'entrée du filtre de synthèse 6 qui fournit sur sa sortie un signal de parole synthétisé. Le signal de parole synthétique obtenu est appliqué sur l'entrée "-" du circuit soustracteur 9 pour être soustrait du signal de parole échantillonné fourni par le convertisseur analogique-numérique 2. Le résultat de la soustraction représente le bruit de quantification produit par la chaîne de synthèse et ce bruit est appliqué à l'entrée du filtre de pondération de bruit 10 pour être pondéré par les coefficients $K_i$ fournis par le circuit quantificateur 4. Le bruit pondéré obtenu à la sortie du filtre 10 est appliqué au circuit de minimisation d'erreur pondéré 11 qui ajuste par la boucle d'asservissement ainsi formée l'amplitude $Y_j$ et la position $X_j$ des impulsions pour que l'erreur pondérée obtenue soit minimale. Les amplitudes $Y_i$ des impulsions et leurs positions $X_i$ sont également appliqués au circuit quantificateur 12 et les mots binaires obtenus sont affectés chacun de façon connue d'un bit de parité par le codeur de parité 14 avant d'être appliqués sur une deuxième entrée du circuit multiplexeur 17. Le circuit de minimisation d'erreurs pondérées relève également de façon connue l'amplitude maximale des impulsions $Y_i$ obtenues qui représente la valeur du gain g appliqué à l'entrée du circuit quantificateur 13. Les mots binaires obtenus à la sortie du circuit quantificateur 13 sont appliqués d'une part à l'entrée du circuit multiplieur 7 et d'autre part, au codeur 15 qui adjoint de façon connue les bits de correction d'erreur de type BCH par exemple, pour former le deuxième champ décrit précédemment et le mot binaire obtenu est appliqué sur la troisième entrée du circuit multiplexeur 17.

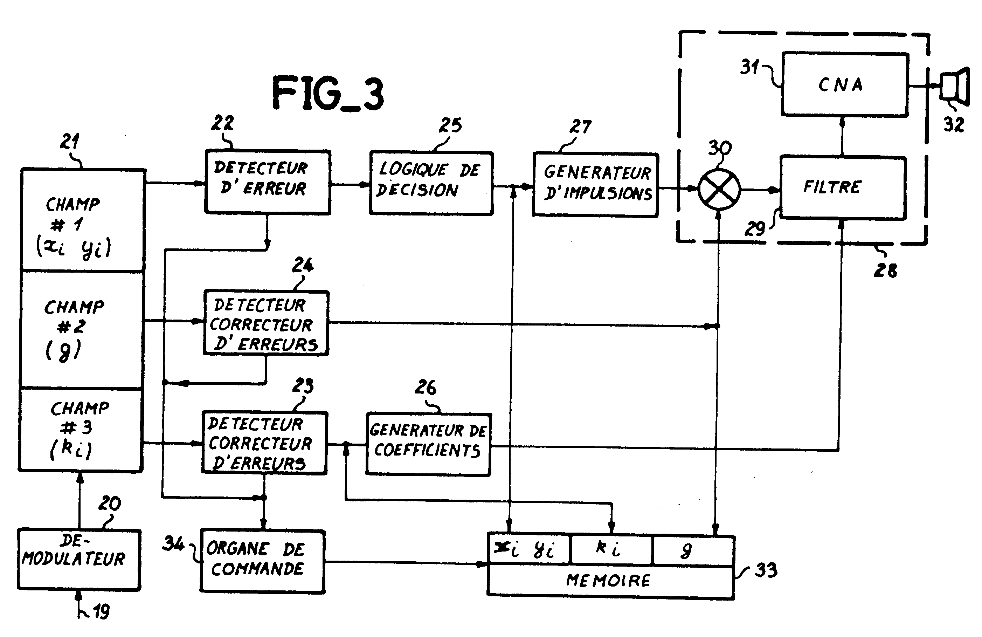

Le dispositif de réception est représenté à la figure 3 il comprend un démodulateur 20, un démultiplexeur 21, un détecteur d'erreurs 22, un premier détecteur correcteur d'erreurs 23 et un deuxième détecteur correcteur d'erreurs 24. Il comprend également, une logique microprogrammée de décision 25 formée par un microprocesseur ou tout dispositif équivalent, un générateur de coefficients 26 et un générateur d'impulsions 27. Les deux générateurs 26 et 27 sont couplés à un synthétiseur de parole 28 représenté à l'intérieur d'une ligne en pointillés, formé par un filtre de synthèse 29, un circuit multiplieur 30 et un convertisseur numérique-analogique 31. La sortie du convertisseur numérique-analogique 31 est couplée à un transducteur de parole 32 du type haut-parleur ou tout dispositif équivalent capable de restituer la parole. Une mémoire 33 mémorise les échantillons fournis par les détecteurs 23 et 24. La lecture et l'écriture de la mémoire 33 est assurée de façon connue par un organe de commande 34. Le fonctionnement est le suivant : la trame constituée par les trois champs décrits précédemment est démodulée par le démodulateur 20 et les bits alimentent le démultiplexeur 21. Le premier champ constitué par les échantillons de parole $X_i$ $Y_i$ est appliqué au détecteur d'erreurs 22, le deuxième champ constitué par les coefficients $K_i$ du filtre de synthèse est appliqué au détecteur correcteur d'erreurs 23 et le troisième champ qui fournit l'amplitude de référence est appliqué au détecteur correcteur d'erreurs 24. Les échantillons $X_i$ et $Y_i$ sont appliqués au générateur d'impulsions 27 sous contrôle de la logique de décision 25 microprogrammée qui agit selon le procédé décrit précédemment. Si au plus $K_1$ bits de parité testés par le détecteur d'erreurs 22 sont incorrects les impulsions à parité incorrecte ne sont pas transmises. Si le nombre de parités incorrectes est compris entre les nombres $K_1 + 1$ et $K_2$, toutes les impulsions y compris celles dont la parité est incorrecte sont transmises à l'entrée du générateur d'impulsions 27, car même si la parole synthétisée dans ce cas est fortement bruitée elle est cependant plus compréhensible que si les impulsions perturbées étaient effacées. Enfin si le nombre de bits de parité incorrecte est compris entre deux valeurs $K_2 + 1$ et K où K est le nombre total d'impulsions codées les impulsions de la trame courante sont considérées comme non valables et le générateur d'impulsions 27 va chercher dans la mémoire 33 les impulsions de la trame précédente. Le générateur de coefficients 26 réagit en fonction des résultats fournis par le détecteur correcteur d'erreurs 23. Si aucune erreur n'est détectée dans les bits de poids forts les coefficients sont utilisés tels quels et sont transmis à l'entrée du filtre de synthèse 29. Si une erreur est détectée celle-ci est corrigée et les bits de poids forts corrigés sont utilisés avec les bits de poids faibles tels quels, l'ensemble étant transmis comme précédemment au filtre de synthèse 29. Par contre, si une configuration d'erreur non corrigible est détectée, le détecteur d'erreurs 23 déclare le paquet de coefficients non valide et va chercher le dernier paquet de coefficients reconnus valides qui est mémorisé dans la mémoire 33. Enfin le détecteur correcteur d'erreurs 24 transmet l'amplitude de référence au multiplieur 30 toutes les fois qu'aucune erreur n'est détectée ou après correction d'une seule erreur. Comme précédemment, si une configuration d'erreurs non corrigible est détectée, l'amplitude codée est déclarée non valide et remplacée par la dernière amplitude reconnue valide trouvée dans la mémoire 33, après multiplication par un facteur inférieur ou égal à 1.

**Revendications**

1. Procédé de transmission numérique de signaux vocaux par voie radio dans lequel la parole est segmentée à l'émission en trames de durée fixe et transmises indépendamment les unes des autres et est reconstituée à la réception par un filtre de synthèse (29), caractérisé en ce que chaque trame comporte un premier champ composé de mots binaires de structures identiques pour coder la position et l'amplitude des impulsions d'excitation du filtre de synthèse, un deuxième champ composé d'au moins un mot binaire pour coder l'amplitude de l'impulsion de référence associée à la trame et un troisième champ composé de mots binaires pour coder les coefficients du filtre de synthèse, seuls les codes représentant l'amplitude de référence et les coefficients du filtre de synthèse composant les deuxième et troisième champ étant accompagnés de codes autocorrecteurs d'erreurs (15, 16), en ce que chaque mot binaire composant le premier champ est complété par un bit de parité (14), et en ce que les impulsions incorrectes de position et d'amplitude d'une trame reçue ne sont pas prises en compte si au plus un nombre déterminé $K_1$ de bits de parité sont trouvés incorrects.

2. Procédé selon la revendication 1, caractérisé en ce que toutes les impulsions codées d'une trame reçue sont prises en compte si le nombre de bits de parité incorrects est compris entre deux nombres déterminés $K_1 + 1$ et $K_2$.

3. Procédé selon la revendication 2, caractérisé en ce que la position et l'amplitude des impulsions reçues d'une trame ne sont pas prises en compte et sont remplacées par les impulsions d'une trame précédente lorsque le nombre de bits à parité incorrecte est compris entre deux nombres déterminés $K_2 + 1$ et K, K étant le nombre total d'impulsions codées.

4. Procédé selon l'une quelconque des revendications 1 à 3, caractérisé en ce que les bits des mots de code du premier champ sont regroupés par paires ou dibits, auxquelles sont associées respectivement quatre fréquences de modulation différentes.

5. Procédé selon l'une quelconque des revendications 1 à 4, caractérisé en ce que les bits des deuxième et troisième champs sont transmis en utilisant les deux fréquences de modulation dont l'écart de fréquence est parmi les quatre fréquences le plus grand.

6. Procédé selon l'une quelconque des revendications 1 à 5, caractérisé en ce que chaque trame a une durée de 25 millisecondes.

7. Dispositif de transmission numérique de signaux vocaux par voie radio comportant dans sa partie transmission un convertisseur analogique-numérique (2), pour convertir les signaux vocaux en signaux numériques, un filtre de synthèse (6) couplé d une part, à la sortie du convertisseur analogique-numérique (2) à travers un circuit de quantification des coefficients du filtre de synthèse, caractérisé en ce que la partie transmission comprend en plus un circuit (11) de minimisation d'erreur pondéré pour, appliquer des valeurs d'échantillons à l'entrée du filtre de synthèse en fonction des écarts entre les signaux fournis par la sortie du filtre de synthèse et ceux fournis à la sortie du convertisseur analogique-numérique (2) et détecter la valeur de l'échantillon de référence, ainsi qu'un circuit multiplexeur (17) couplé au circuit convertisseur analogique-numérique (2) et au circuit de minimisation d'erreur pondéré (11) par l'intermédiaire de circuits quantificateurs (3, 13, 14) pour transmettre au moyen d'un modulateur (19) des trames numériques composées chacune d'un premier champ pour coder la position et l'amplitude des impulsions d'excitation du filtre de synthèse, un deuxième champ pour coder l'amplitude de l'impulsion de référence associée à la trame et un troisième champ composé de mots binaires pour coder les coefficients du filtre de synthèse, le circuit multiplexeur (17) étant couplé aux circuits quantificateurs des échantillons des deuxième et troisième champs au travers de codeurs de bits de redondance autocorrecteurs d'erreurs des mots binaires contenus dans les deuxième et troisième champs pour les associer lors de la transmission aux seuls deuxième et troisième champs.

8. Dispositif selon la revendication 7, caractérisé en ce qu'il comporte dans sa partie réception un démodulateur (20) couplé à un synthétiseur de parole (28) au travers de moyens de rangement (21) et de circuits correcteurs d'erreurs (23, 24) des champs de chacune des trames reçues, ainsi qu'une mémoire (33) pour mémoriser chaque champ reçu.

## Claims

1. A process for the digital transmission of voice signals by radio in which speech is segmented on transmission into frames of a fixed duration, transmitted independently from each other, and is reconstituted on reception by a synthesizer filter (29), characterised in that each frame comprises a first field composed of channel words with identical structures to encode the position and amplitude of the excitation pulses of the synthesizer filter, a second field composed of at least one channel word to encode the amplitude of the reference pulse associated with the frame and a third field composed of channel words to encode the coefficients of the synthesizer filter, only the codes representing the reference amplitude and the coefficients of the synthesizer filter composing the second and third field being accompanied by error correction codes (15, 16), in that each channel word composing the first field is supplemented by a parity bit (14), and in that the incorrect position and amplitude pulses of a frame received are not taken into account if at most a given number $K_1$ of parity bits are found to be incorrect.

2. A process according to Claim 1, characterised in that all the encoded pulses of a frame received are taken into account if the number of incorrect parity bits is comprised between two given numbers $K_1 + 1$ and $K_2$.

3. A process according to Claim 2, characterised in that the position and amplitude of the received pulses of a frame are not taken into account and are replaced by pulses of a preceding frame when the number of bits with incorrect parity is comprised between two given numbers $K_1 + 1$ and K, K being the total number of encoded pulses.

4. A process according to any one of Claims 1 to 3, characterised in that the bits of the code words of the first field are grouped into pairs or dibits, with which are associated respectively four different modulation frequencies.

5. A process according to any one of Claims 1 to 4, characterised in that the bits of the second and third fields are transmitted by using the two modulation frequencies, the frequency deviation of which is among the four greatest frequencies.

6. A process according to any one of Claims 1 to 5, characterised in that each frame has a duration of 25 milliseconds.

7. A device for the digital transmission of voice signals by radio comprising in its transmission part an analogue-to-digital converter (2), to convert the voice signals into digital signals, a synthesizer filter (6) coupled on the one hand to the output of the analogue-to-digital converter (2) through a circuit for quantifying the coefficients of the synthesizer filter, characterised in that the transmission part further comprises a weighted error minimisation circuit (11) in order to apply sample values to the input of the synthesizer filter as a function of the deviations between the signals supplied by the output of the synthesizer filter and those supplied at the output of the analogue-to-digital converter (2) and to detect the value of the reference sample, as well as a multiplexer circuit (17) coupled to the analogue-to-digital converter circuit (2) and to the weighted error minimisation circuit (11) through the intermediary of quantifying circuits (3, 13, 14) in order to transmit by means of a modulator (19) digital frames each composed of a first field to encode the position and amplitude of the excitation pulses from the synthesizer filter, a second field to encode the amplitude of the reference pulse associated with the frame and a third field composed of channel words to encode the coefficients of the synthesizer filter, the multiplexer circuit (17) being coupled to the quantifying circuits of the samples from the second and third fields through encoders for error-correcting redundancy bits of the channel words contained in the second and third fields in order to associate them on transmission only with she second and third fields.

8. A device according to Claim 7, characterised in that it comprises in its reception part a demodulator (20) coupled to a speech synthesizer (28) through storage means (21) and error-correcting circuits (23, 24) of the fields of each of the frames received, as well as a memory (33) to memorise each field received.

## Patentansprüche

1. Verfahren zur digitalen Übertragung von Sprachsignalen über Funk, wobei die Sprache auf der Sendeseite in Rahmen fester Dauer zerhackt wird, die unabhängig voneinander übertragen werden und wobei die Sprachsignale beim Empfang durch ein Synthesefilter (29) wiederhergestellt werden, dadurch gekennzeichnet, daß jeder Rahmen ein erstes Feld mit Binärwörtern identischer Struktur zur Kodierung der Position und der Amplitude der das Synthesefilter anregenden Impulse, ein zweites Feld mit mindestens einem Binärwort zur Kodierung der Amplitude des dem Rahmen zugeordneten Bezugsimpulses und ein drittes Feld mit Binärwörtern zur Kodierung der Koeffizienten des Synthesefilters aufweist, wobei nur die die Bezugsamplitude und die Koeffizienten des Synthesefilters repräsentierenden Kodes im zweiten und dritten Feld von Fehlerkorrekturkodes (15, 16) begleitet sind, daß jedes Binärwort des ersten Felds durch ein Paritätsbit (14) ergänzt wird und daß die unkorrekten Positions- und Amplitudenimpulse eines empfangenen Rahmens nicht berücksichtigt werden, wenn die Anzahl der als falsch erkannten Paritätsbits höchstens eine vorbestimmte Zahl $K_1$ ist.

2. Verfahren nach Anspruch 1, dadurch gekennzeichnet, daß alle kodierten Impulse eines empfangenen Rahmens berücksichtigt werden, wenn die Anzahl von falschen Paritätsbits zwischen zwei vorbestimmten Werten $K_1 + 1$ und $K_2$ liegt.

3. Verfahren nach Anspruch 2, dadurch gekennzeichnet, daß die Position und Amplitude der empfangene Impulse eines Rahmens nicht berücksichtigt werden und durch die Impulse eines vorhergehenden Rahmens ersetzt werden, wenn die Anzahl von falschen Paritätsbits zwischen zwei vorbestimmten Werten $K_2 + 1$ und K liegt, wobei K die Gesamtzahl der kodierten Impulse ist.

4. Verfahren nach einem beliebigen der Ansprüche 1 bis 3, dadurch gekennzeichnet, daß die Bits der Kodeworte des ersten Feldes zu Paaren von Bits zusammengefaßt sind, denen je eine von vier verschiedenen Modulationsfrequenzen zugeordnet sind.

5. Verfahren nach einem beliebigen der Ansprüche 1 bis 4, dadurch gekennzeichnet, daß die Bits des zweiten und dritten Felds unter Verwendung der beiden Modulationsfrequenzen übertragen werden, deren Frequenzabstand unter den vier Frequenzen der größte ist.

6. Verfahren nach einem beliebigen der Ansprüche 1 bis 5, dadurch gekennzeichnet, daß jeder Rahmen eine Dauer von 25 ms besitzt.

7. Vorrichtung zur digitalen Übertragung von Sprachsignalen per Funk, wobei auf der Sendeseite ein Analog-Digital-Wandler (2) zur Umwandlung der Sprachsignale in digitale Signale, ein Synthesefilter (6), das mit dem Ausgang des Analog-Digital-Wandlers (2) über einen Quantifizierkreis der Koeffizienten des Synthesefilters gekoppelt ist, dadurch gekennzeichnet, daß auf der Sendeseite weiter ein Kreis (11) zur Minimisierung des gewichteten Fehlers vorgesehen ist, um Tastprobenwerte an den Eingang des Synthesefilters abhängig von den Abständen zwischen den vom Ausgang des Synthesefilters gelieferten Signalen und den am Ausgang des Analog-Digital-Wandlers (2) gelieferten Signalen anzulegen und um den Wert der Bezugstastprobe zu erfassen, und daß weiter ein Multiplexerkreis (17) vorgesehen ist, der mit dem Analog-Digital-Wandlerkreis (2) und mit dem Kreis zur Minimisierung des gewichteten Fehlers (11) über Quantifizierkreise (3, 13, 14) gekoppelt ist, um mit Hilfe eines Modulators (19) digitale Rahmen, die je aus einem ersten Feld zur Kodierung der Position und der Amplitude der Impulse zur Anregung des Synthesefilters, einem zweiten Feld zur Kodierung der Amplitude des dem Rahmen zugeordneten Bezugsimpulses und einem dritten Feld zusammengesetzt sind, das Binärwörter zur Kodierung der Koeffizienten des Synthesefilters enthält, wobei der Multiplexerkreis (17) mit den Quantifizierkreisen der Tastproben des zweiten und des dritten Feldes über fehlerkorrigierende Redundanzbitkodierer der im zweiten und im dritten Feld enthaltenen Binärwörter gekoppelt ist, um sie während der Übertragung nur dem zweiten und dritten Feld zuzuordnen.

8. Vorrichtung nach Anspruch 7, dadurch gekennzeichnet, daß sie in ihrem Empfangsteil einen Demodulator (20), der an einen Sprachsynthetisierer (28) über Verteilmittel (21) und Fehlerkorrekturkreise (23, 24) für die Felder jedes empfangene Rahmens gekoppelt ist, und daß weiter ein Speicher (33) zur Speicherung jedes empfangenen Feldes vorgesehen ist.

EP 0 275 751 B1

# FIG_1

| Dibits | | F |
|---|---|---|
| 0 | 0 | $F_0$ |
| 0 | 1 | $F_1$ |
| 1 | 1 | $F_2$ |
| 1 | 0 | $F_3$ |

# FIG_2

CIRCUIT CORRECTEUR D'ERREURS — 16

1

CAN — 2

ANALYSEUR LPC — 3

CIRCUIT QUANTIFICATEUR — 4

CIRCUIT DE MINIMISATION D'ERREUR PONDERE — 11

GENERATEUR D'IMPULSIONS — 5

FILTRE — 6

7

8

CIRCUIT QUANTIFICATEUR — 12

CODEUR DE PARITE — 14

FILTRE DE PONDERATION DE BRUIT — 10

9

CIRCUIT QUANTIFICATEUR — 13

CIRCUIT DE CORRECTION D'ERREURS — 15

MULTIPLEXEUR — 17

MODULATEUR — 18

19

# FIG_3

EP 0 275 751 B1